# EUROPEAN PATENT APPLICATION

(11) **EP 3 399 320 A1**
(43) Date of publication of application: **07.11.2018**
(21) Application number: 17169047.2
(22) Date of filing: 02.05.2017
(51) Int. Cl.: G01P 5/02, G01P 5/26, G01F 1/28, G01F 1/66

(54) **SENSOR ELEMENT AND METHOD FOR MEASURING OF NEAR-FIELD, LARGE-SCALE HYDRODYNAMIC CHARACTERISTICS**

(71) Applicant: RIJKSUNIVERSITEIT GRONINGEN, 9712 CP Groningen (NL)
(72) Inventor: van Netten, Sietse Marten, 9747 AG Groningen (NL); Wolf, Berend Jan, 9747 AG Groningen (NL); MacPherson, William Neil, Brightons, Falkirk, FK2 0GF (GB)
(74) Representative: V.O.

(57) **Abstract**

A sensor element (1) for measuring of near-field, large-scale hydrodynamic characteristics comprises an elongated elastic support structure (2), a mounting part (4) at one end of the support structure, and a swaying body (5) forming a thickened end of the sensor element at the other end of the support structure. In mounted condition, the swaying body is being moved by hydrodynamic force action, while the support structure is being moved by elastically bending then. The support structure comprises at least one optical fiber (6A, 6C), which is forming a fiber Bragg grating (7A, 7C) within the support structure. The synergy of the thick swaying body, the elongated elastic support structure, and the optical fiber forming a fiber Bragg grating within the elongated elastic support structure provides a highly effective and low-cost solution for measuring of near-field, large-scale hydrodynamic characteristics of a hydrodynamic environment.

## Description

The invention relates to measuring of near-field, large-scale hydrodynamic characteristics of a hydrodynamic environment. More in particular the invention relates to a sensor element and a method for said measuring.

Said measuring may for example be performed for environmental monitoring in cabled ocean observatories, for marine renewable energy techniques, for port/harbour security, etc. Most known methods for (arrays of) fluid flow sensors rely on piezo-electric methods to operate in wet conditions, which limit employability of hydrodynamic measuring systems. Electric signals lose power over large distances and electronic failure can incapacitate a deployed sensor array. Known remote and large scale sensor arrays therefore have various limitations.

It is an object of the invention to improve measuring of near-field, large-scale hydrodynamic characteristics of a hydrodynamic environment.

For that purpose the invention provides a sensor element according to the appended independent claim 1, as well as a method according to the appended independent claim 9. Preferable embodiments of the invention are provided by the appended dependent claims 2-8.

Hence, the invention provides a sensor element configured for use in a sensor system for measuring of near-field, large-scale hydrodynamic characteristics of a hydrodynamic environment, wherein the sensor element comprises:
- an elongated elastic support structure being elongated in a longitudinal support structure direction and having a first longitudinal end and a second longitudinal end, which are opposing one another in said longitudinal support structure direction;
- a mounting part being located at said first longitudinal end and being configured for realizing a mounted condition of the sensor element in said hydrodynamic environment; and
- a swaying body, which is connected to the elongated elastic support structure at said second longitudinal end, where it is forming a thickened end of the sensor element as compared to the thickness of the elongated elastic support structure, and which, as considered in said mounted condition, is configured for receiving hydrodynamic force action occurring in said hydrodynamic environment whereby the swaying body is being moved within said hydrodynamic environment and relative to the mounting part, while at the same time being supported by the elongated elastic support structure, which at the same time is being moved along with the swaying body by elastic bending;
and wherein the sensor element is a fiber Bragg grating sensor in that said elongated elastic support structure comprises at least one optical fiber, which is extending within the elongated elastic support structure along the longitudinal support structure direction, and which is forming at least one fiber Bragg grating within the elongated elastic support structure.

Hence, in a mounted condition of the sensor element according to the invention, the thick swaying body is supported by the elongated elastic support structure to protrude relative to an external structure to which the sensor element is mounted, while the fiber Bragg grating within the elongated elastic support structure is stretched and compressed along with the elastic bending movements of the elongated elastic support structure in dependence of the movements of the swaying body induced by the hydrodynamic environment to thereby continuously provide sensing results. The synergy of all these features provides a highly effective and low-cost solution for measuring of near-field, large-scale hydrodynamic characteristics of a hydrodynamic environment. This especially holds true when a sensor system is used which comprises a multiplicity of sensor elements according to the invention, i.e. when performing a method according to the invention. The multiplicity of sensor elements may for example be arranged in array-like patterns, for example in manners to mimic lateral line organs of fish.

Said synergy of features is explained as follows. The thick swaying body being supported by the elongated elastic support structure to protrude relative to an external structure means that the swaying body will pick up the hydrodynamic force action at locations as far as desirable outside of the near boundary layer along the external structure, thereby avoiding the measurement of undesirable local boundary layer effects. At the same time, said protruding of the swaying body relative to an external structure is forming an effective lever mechanism, which provides high sensitivity of the fiber Bragg grating within the elongated elastic support structure. Thus, high sensitivity of the fiber Bragg grating sensor is obtained.

At the same time, the at least one optical fiber within the elongated elastic support structure allows for automatical and continuous high-speed transmission of sensed signals, which, as a yet further advantage, does not require the in-situ availability of electrical power for the operation of the sensor. In other words, the present invention circumvents the above-explained limitations of known methods for sensing flow.

In addition, as a yet further advantage, the at least one optical fiber within the elongated elastic support structure may substantially contribute to the elasticity of the elongated elastic support structure.

It is noted that the general concepts of a fiber Bragg grating and of its use in a fiber Bragg grating sensor is not described in detail herein, as these concepts are known in the art and available to the skilled person.

In a preferable embodiment of the invention, the swaying body has a substantially spherical shape. This allows for an omni-directionally equal sensitivity of the sensor element to hydrodynamic force action occurring in said hydrodynamic environment. It is noted that, more in general, and instead of said preferable spherical shape, other, non-circle-symmetrical shapes can be used to tune the directional sensitivity of the sensor.

In a further preferable embodiment of the invention, the swaying body has a density which is smaller than 1020 kg/m3, preferably less than 800 kg/m3, and more preferably less than 600 kg/m3. These densities provide specific buoyancy behaviours of the swaying body in seawater, which, under circumstances, may improve the working of the sensor element. That is, the swaying body can be neutrally buoyant, but by decreasing the relative density of the swaying body, the sensitivity-bandwidth product can be increased to increase the sensors dynamic range or sensitivity.

In a yet further preferable embodiment of the invention, said fiber Bragg grating is located distant from a central axis of the elongated elastic support structure, as seen in an unbent condition of the elongated elastic support structure. Such an off-center position of the fiber Bragg grating provides a favourable stretching and compressing behaviour of the fiber Bragg grating when the elongated elastic support structure is elastically bending in dependence of the movements of the swaying body.

In a yet further preferable embodiment of the invention, said at least one optical fiber is a multiplicity of such optical fibers. Accordingly, such a multiplicity of such optical fibers has a corresponding multiplicity of such optical fiber Bragg gratings. This allows for obtaining more detailed, more accurate and more advanced sensing results.

In a yet further preferable embodiment of the invention, a single one of said at least one optical fiber comprises one and only one individual optical fiber core and an individual optical fiber cladding which surrounds said individual optical fiber core. Hence, according to this preferable embodiment the elongated elastic support structure comprises a single-core optical fiber.

In a yet further preferable embodiment of the invention, a single one of said at least one optical fiber comprises a multiplicity of mutually distant optical fiber cores and a common integral optical fiber cladding which integrally surrounds each of said mutually distant optical fiber cores. Hence, according to this preferable embodiment the elongated elastic support structure comprises a multi-core optical fiber.

The abovementioned single-core and multi-core optical fibers generally will have different deflection properties as compared to one another, such as for example different bending stiffness. Since the elongated elastic support structure may comprise at least one single-core optical fiber and/or at least one multi-core optical fiber, there are many various arrangements of these single-core and/or multi-core optical fiber(s) possible, resulting in many possibilities for obtaining different deflection properties of the elongated elastic support structure, as well as resulting in many possibilities for arranging fiber Bragg grating(s) in the elongated elastic support structure. Accordingly it will be clear that, depending on the particular uses of a sensor element, both the single-core optical fibers and the multi-core optical fibers may have their own particular advantages.

The abovementioned aspects and other aspects of the invention will be apparent from and elucidated with reference to the embodiments described hereinafter by way of non-limiting examples only and with reference to the schematic figures in the enclosed drawing.

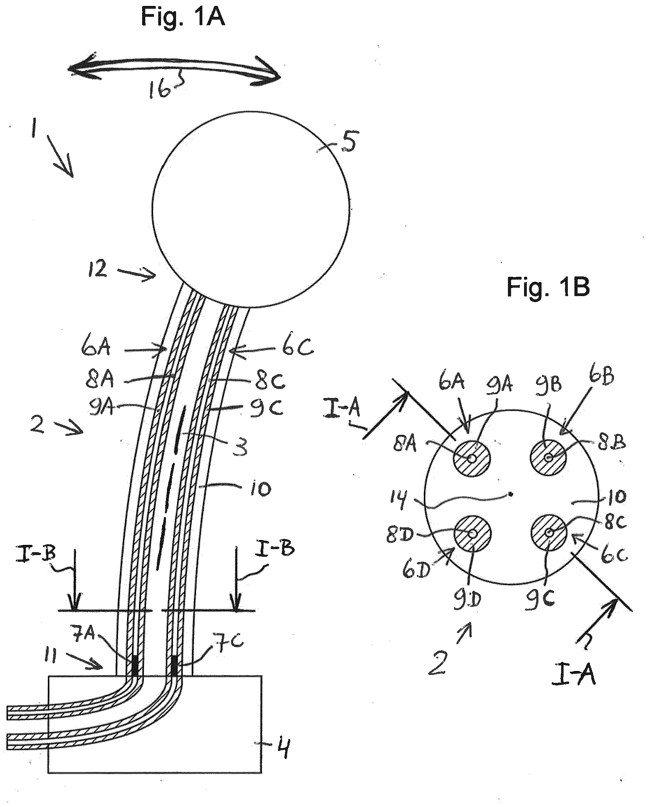

Figs. 1A and 1B show an example of a first embodiment of a first sensor element according to the invention.
Fig. 1A is a longitudinal cross-sectional view through the first sensor element, wherein the view is according to the arrows I-A in Fig. 1B.
Fig. 1B is a transverse cross-sectional view onto the elongated elastic support structure of the first sensor element, wherein the view is according to the arrows I-B in Fig. 1A.
Figs. 2A and 2B show an example of a second embodiment of a second sensor element according to the invention.

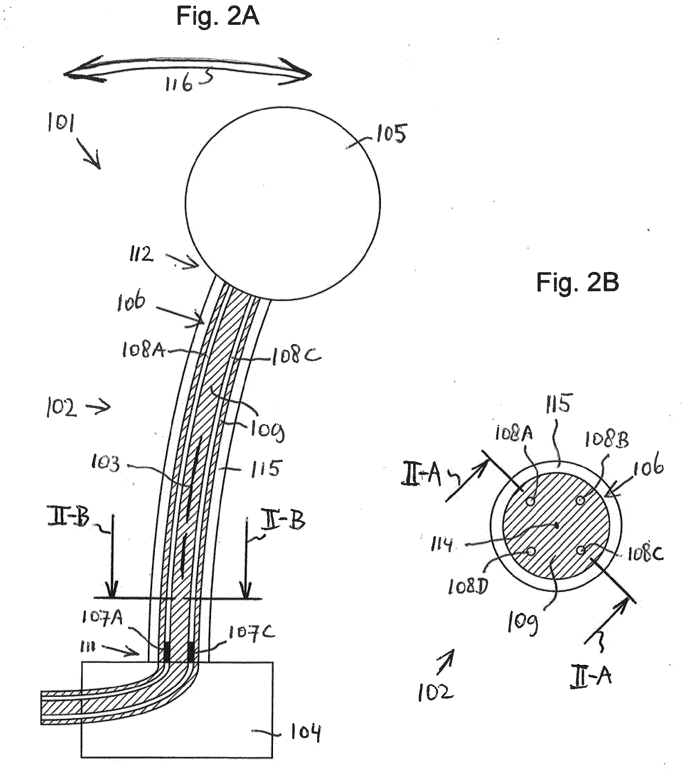

Fig. 2A is a longitudinal cross-sectional view through the second sensor element, wherein the view is according to the arrows II-A in Fig. 2B.
Fig. 2B is a transverse cross-sectional view onto the elongated elastic support structure of the second sensor element, wherein the view is according to the arrows II-B in Fig. 2A.

The reference signs used in Figs. 1A, 1B in relation to the first sensor element 1 are referring to the abovementioned parts and aspects of the invention, as well as to related parts and aspects, in the following manner.
- 1: sensor element
- 2: elongated elastic support structure
- 3: longitudinal support structure direction
- 4: mounting part
- 5: swaying body
- 6A-6D: optical fiber
- 7A, 7C: fiber Bragg grating
- 8A-8D: optical fiber core
- 9A-9D: individual optical fiber cladding
- 10: adhesive
- 11: first longitudinal end
- 12: second longitudinal end
- 14: central axis
- 16: movement of swaying body

In Figs. 2A, 2B, all of the abovementioned parts and aspects which are applicable in relation to the second sensor element 101, and which are alike to the parts and aspects of the first sensor element 1, have been indicated by the same reference numerals as used in Figs. 1A, 1B, but increased by the integer value 100. In relation to the second sensor element 101 the following additional reference signs are applicable for the abovementioned and related parts and aspects of the invention.
- 106: optical fiber
- 109: common integral optical fiber cladding
- 115: (polymer) jacket around the optical fiber 106

Based on the above introductory description, including the brief description of the drawing figures, and based on the above-explained reference signs used in the drawing, the shown examples of Figs. 1A, 1B and Figs. 2A, 2B are readily self-explanatory. The following extra explanations are given.

Reference is first made to the first sensor element 1 of Figs. 1A, 1B. The first sensor element 1 has four optical fiber cores 8A, 8B, 8C, 8D. These four optical fiber cores have four corresponding fiber Bragg gratings, respectively. Of these four corresponding fiber Bragg gratings, only the fiber Bragg gratings 7A, 7C relating to the optical fiber cores 8A, 8C are visible in the longitudinal cross-sectional view of Fig. 1A. It is noted that the remaining two non-shown fiber Bragg gratings relating to the optical fiber cores 8B, 8D are at the same longitudinal position along the longitudinal support structure direction 3 as the fiber Bragg gratings 7A, 7C.

Fig. 1A shows the sensor element 1 in a hydrodynamically loaded condition, in which the elongated elastic support structures 2 is in a bent position. In this bent position, the fiber Bragg grating 7A is in stretched condition, while the fiber Bragg grating 7C is in compressed condition.

The first sensor element 1 of Figs. 1A, 1B is an example of the abovementioned further preferable embodiment of the invention, wherein the at least one optical fiber is a multiplicity of such optical fibers. Furthermore, the first sensor element 1 of Figs. 1A, 1B is an example of the abovementioned preferable embodiment of the invention, wherein a single one of said at least one optical fiber comprises one and only one individual optical fiber core and an individual optical fiber cladding which surrounds said individual optical fiber core. In fact, each of the single-core optical fibers 6A, 6B, 6C, 6D has its own corresponding individual optical fiber core 8A, 8B, 8C, 8D, respectively, surrounded by its own corresponding individual optical fiber cladding 9A, 9B, 9C, 9D, respectively. The four optical fibers 6A, 6B, 6C, 6D are in a square matrix formation embedded in the optical adhesive 10.

Reference is now made to the second sensor element 101 of Figs. 2A, 2B. The second sensor element 2 has four optical fiber cores 108A, 108B, 108C, 108D. These four optical fiber cores have four corresponding fiber Bragg gratings, respectively. Of these four corresponding fiber Bragg gratings, only the fiber Bragg gratings 107A, 107C relating to the optical fiber cores 108A, 108C are visible in the longitudinal cross-sectional view of Fig. 2A. It is noted that the remaining two non-shown fiber Bragg gratings relating to the optical fiber cores 108B, 108D are at the same longitudinal position along the longitudinal support structure direction 103 as the fiber Bragg gratings 107A, 107C.

Fig. 2A shows the sensor element 101 in a hydrodynamically loaded condition, in which the elongated elastic support structures 102 is in a bent position. In this bent position, the fiber Bragg grating 107A is in stretched condition, while the fiber Bragg grating 107C is in compressed condition.

The second sensor element 101 of Figs. 2A, 2B is an example of the abovementioned further preferable embodiment of the invention, wherein a single one of said at least one optical fiber comprises a multiplicity of mutually distant optical fiber cores and a common integral optical fiber cladding which integrally surrounds each of said mutually distant optical fiber cores. In fact, the optical fiber 106 is a multi-core optical fiber, which comprises the mutually distant optical fiber cores 108A, 108B, 108C, 108D and the common integral optical fiber cladding 109 which integrally surrounds each of these mutually distant optical fiber cores 108A, 108B, 108C, 108D.

In the shown examples, the two elongated elastic support structures 2 and 102 have mutually different bending stiffness which defines the amount of resonance and therefore sensitivity of the first sensor element 1 and the second sensor element 101, respectively.

All optical fibers used in sensor elements according to the invention, including their (inscribed) fiber Bragg gratings, can be made in many various manners, for example in the many various manners known in the art. Furthermore, all parts of the sensor elements according to the invention may have many various dimensions. In the shown examples, an optical fiber core could for example have a typical diameter of 8.2 µm, an elongated elastic support structure could for example have a typical transverse cross-sectional diameter of 1 mm and a typical length of 50 mm, and a swaying body could for example have a typical diameter of 10 mm.

While the invention has been described and illustrated in detail in the foregoing description and in the drawing figures, such description and illustration are to be considered exemplary and/or illustrative and not restrictive; the invention is not limited to the disclosed embodiments.

For example, an elongated elastic support structure of a sensor element according to the invention may comprise may various numbers and distributions of the at least one optical fiber.

Other variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. A single part may fulfill the functions of several items recited in the claims. For the purpose of clarity and a concise description, features are disclosed herein as part of the same or separate embodiments, however, it will be appreciated that the scope of the invention may include embodiments having combinations of all or some of the features disclosed. The mere fact that certain measures are recited in mutually different dependent claims does not indicate that a combination of these measures can not be used to advantage. Any reference signs in the claims should not be construed as limiting the scope.

## Claims

1. A sensor element (1; 101) configured for use in a sensor system for measuring of near-field, large-scale hydrodynamic characteristics of a hydrodynamic environment, wherein the sensor element comprises:
• an elongated elastic support structure (2; 102) being elongated in a longitudinal support structure direction (3; 103) and having a first longitudinal end (11; 111) and a second longitudinal end (12; 112), which are opposing one another in said longitudinal support structure direction;
• a mounting part (4; 104) being located at said first longitudinal end and being configured for realizing a mounted condition of the sensor element in said hydrodynamic environment; and
• a swaying body (5; 105), which is connected to the elongated elastic support structure at said second longitudinal end, where it is forming a thickened end of the sensor element as compared to the thickness of the elongated elastic support structure, and which, as considered in said mounted condition, is configured for receiving hydrodynamic force action occurring in said hydrodynamic environment whereby the swaying body is being moved within said hydrodynamic environment and relative to the mounting part, while at the same time being supported by the elongated elastic support structure, which at the same time is being moved along with the swaying body by elastic bending;
and wherein the sensor element is a fiber Bragg grating sensor in that said elongated elastic support structure comprises at least one optical fiber (6A, 6B, 6C, 6D; 106A, 106B, 106C, 106D), which is extending within the elongated elastic support structure along the longitudinal support structure direction, and which is forming at least one fiber Bragg grating (7A, 7C; 107A, 107C) within the elongated elastic support structure.

2. A sensor element according to claim 1, wherein the swaying body (5; 105) has a substantially spherical shape.

3. A sensor element according to claim 1 or 2, wherein the swaying body (5; 105) has a density which is smaller than 1020 kg/m³, preferably less than 800 kg/m³, and more preferably less than 600 kg/m³.

4. A sensor element according to any one of the preceding claims, wherein said fiber Bragg grating (7A, 7C; 107A, 107C) is located distant from a central axis (14; 114) of the elongated elastic support structure (2; 102), as seen in an unbent condition of the elongated elastic support structure (3; 103).

5. A sensor element according to any one of the preceding claims, wherein said at least one optical fiber (6A, 6B, 6C, 6D) is a multiplicity of such optical fibers.

6. A sensor element (1) according to any one of the preceding claims, wherein a single one (6A, 6B, 6C, 6D) of said at least one optical fiber comprises one and only one individual optical fiber core (8A, 8B, 8C, 8D) and an individual optical fiber cladding (9A, 9B, 9C, 9D) which surrounds said individual optical fiber core.

7. A sensor element (101) according to any one of the preceding claims, wherein a single one (106) of said at least one optical fiber comprises a multiplicity of mutually distant optical fiber cores (108A, 108B, 108C, 108D) and a common integral optical fiber cladding (109) which integrally surrounds each of said mutually distant optical fiber cores.

8. A sensor system for measuring of near-field, large-scale hydrodynamic characteristics of a hydrodynamic environment, wherein the sensor system comprises at least one sensor element (1, 101) according to any one of the preceding claims.

9. A method for measuring of near-field, large-scale hydrodynamic characteristics of a hydrodynamic environment, wherein the method comprises the use of a sensor system according to claim 8, wherein the at least one sensor element (1, 101) of the sensor system is a multiplicity of such sensor elements.
